Europäisches Patentamt

European Patent Office

Office européen des brevets

(19)

(11) Veröffentlichungsnummer: **0 100 818**
**A1**

(12) # EUROPÄISCHE PATENTANMELDUNG

(21) Anmeldenummer: **83104199.1**

(51) Int. Cl.³: **H 04 L 7/04**

(22) Anmeldetag: **29.04.83**

(30) Priorität: **10.08.82 DE 3229695**

(43) Veröffentlichungstag der Anmeldung:
**22.02.84 Patentblatt 84/8**

(84) Benannte Vertragsstaaten:
**CH DE FR GB IT LI NL SE**

(71) Anmelder: **ANT Nachrichtentechnik GmbH**
**Gerberstrasse 33**
**D-7150 Backnang(DE)**

(72) Erfinder: **de Sanctis, Massimo, Dr. Ing.**
**Hohenstaufenstrasse 9**
**D-7153 Weissach im Tal(DE)**

(72) Erfinder: **Schmidt, Wolfgang, Dr. Ing.**
**Beinsteiner Strasse 59**
**D-7056 Weinstadt(DE)**

(74) Vertreter: **Wiechmann, Manfred, Dipl.-Ing. et al,**
**ANT Nachrichtentechnik GmbH Gerberstrasse 33**
**D-7150 Backnang(DE)**

(54) Verfahren zur Synchronübertragung von seriellen, wortweisen geordneten digitalen Daten.

(57) Die Erfindung betrifft ein Verfahren zur Synchronübertragung von seriellen, wortweise geordneten digitalen Daten mit Einrichtungen zum Fehlerschutz und zur Wortsynchronisation, wobei in unaufwendiger Weise die Fehlerschutzinformation gleichzeitig zur Wortsynchronisation ausgenutzt wird, wodurch Kanalkapazität eingespart wird. Das Verfahren eignet sich besonders zur Übertragung von Envelope-strukturierten Daten von digital codierten Viedeosignalen.

EP 0 100 818 A1

FIG.2

_ 1 _

K1 E7/Ruf/ma
BK 82/64

## Verfahren zur Synchronübertragung von seriellen, wortweise geordneten digitalen Daten

Die Erfindung betrifft ein Verfahren zur Synchronübertragung von seriellen, wortweise geordneten digitalen Daten gemäß Oberbegriff des Patentanspruchs 1.

Die bekannten Datenübertragungsverfahren der obigen Art beruhen darauf, daß dem Informationsanteil, dem Synchronisationsanteil und dem Fehlerschutzanteil eines Wortes oder eines Blockes feste Bit-Positionen zugeordnet sind. Daraus ergibt sich, je nachdem, welchen Stellenwert man auf Synchronisation bzw. Fehlerschutz legt, eine gewisse, notwendig werdende Kanalkapazität.

Aufgabe der vorliegenden Erfindung war es deshalb, ein Verfahren anzugeben, das es ermöglicht, mit einer geringeren Kanalkapazität auszukommen.

Die Lösung erfolgt mit den in dem Hauptanspruch angegebenen Mitteln.

BK 82/64
0100818

Durch das erfindungsgemäße Verfahren ergibt sich der Vorteil einer geringeren Kanalkapazität, wobei Wortsynchronisation und Fehlerschutz erhalten bleiben.

Besonders günstig wird die Anwendung des erfindungsgemäßen Verfahrens bei Datenübertragungen mit Envelope-Strukturen, z.B. 8 + 2 Bit nach CCITT-Empfehlung X.21, wobei neben der 8-Bit-Information je ein Bit für Signalisierung und Synchronisationszwecke benutzt wird. Bei Verwendung dieser Datenstruktur zur Übertragung von Informationen, bei denen die einzelnen benachbarten Datenwörter korreliert sind, und wobei erfindungsgemäß das Synchronisationsbit als Paritätsbit mit ausgenutzt wird, ergibt sich der Vorteil, daß bei erkannten Fehlern entweder das zuletzt richtig empfangene Zeichen wiederholt oder der Mittelwert zwischen den benachbarten Zeichen gebildet wird.

Dieser Vorteil zeigt sich insbesondere bei Übertragung von FBAS- bzw. BAS-Signalen, die z.B. 9 Bit-codiert und in einem 10-Bit-Rahmen untergebracht sind. Es wurde vorgeschlagen, das 10. Bit als Synchronisationsbit zu verwenden. Nachteilig ist hierbei, daß keine Kanalkapazität für einen Fehlerschutz frei ist. Es wurde auch schon vorgeschlagen, das 10. Bit als Paritätsbit zur Fehlerverdeckung zu verwenden und die Synchronisationsimpulse in die Zeilenaustastlücke zu legen. Nachteilig hierbei ist, daß bei einem Bitslip der Rest der betreffenden Videozeile falsch interpretiert wird, da der Digital-Analog-Wandler außer Synchronismus gerät. Außerdem ist durch diese Inband-Signalisierung das FBAS-Signal nicht transparent, was einen zusätzlichen Aufwand auf Sende- und Empfangsseite erforderlich macht.

Denkbar wäre auch, für die Informtion nur 8 Bit zu verwenden und je ein Paritätsbit und ein Synchronisationsbit zu benutzen. Nachteilig hierbei ist, daß am Empfänger ein höheres Quantisierungsgeräusch auftritt, was zu einer schlechteren Bildqualität führt.

Die Ansprüche 5 bis 8 beschreiben eine optimale Schaltungsanordnung zur Durchführung des erfindungsgemäßen Verfahrens
für die Übertragung von (9 Bit (+ 1)-codierten FBAS- bzw.
BAS-Signalen, wobei das 10. Bit gleichzeitig zur Fehlerverdeckung und zur Synchronisation verwendet wird.

Es folgt die Beschreibung der Erfindung anhand der Figuren.

Die Fig. 1 zeigt das Blockschaltbild für ein Ausführungsbeispiel der Erfindung auf der Sendeseite und die
die Fig. 2 dasselbe für die Empfängerseite.

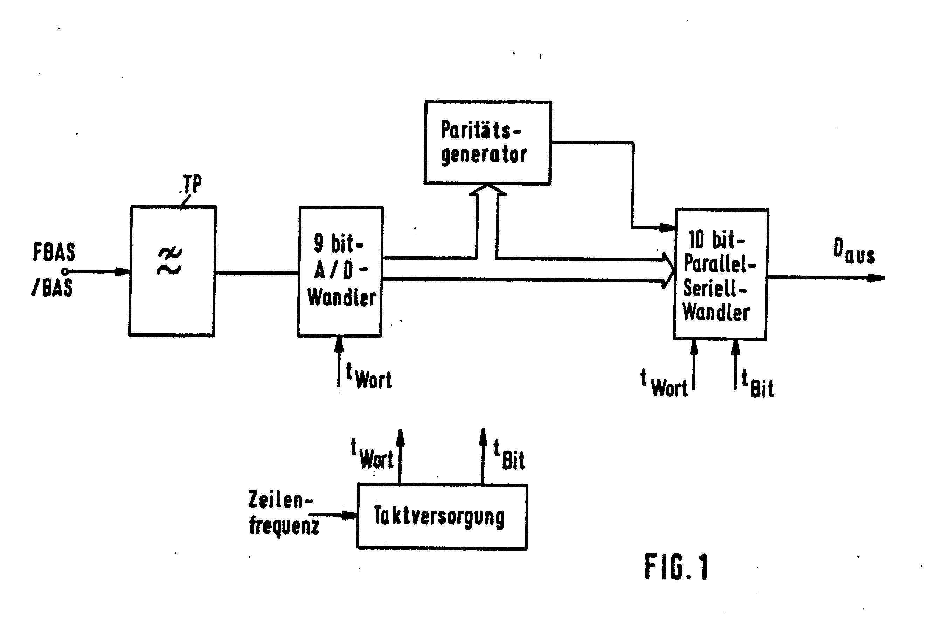

Die erfindungsgemäße Schaltungsanordnung auf der Sendeseite
nach Fig. 1 zeigt einen 9-Bit-A/D-Wandler, durch den das
tiefpaßgefilterte FBAS- bzw. BAS-Signal 9-Bit-codiert wird,
wobei die Abtastfrequenz beispielsweise $1t_{wort}$ = 13,5 MHz
beträgt. Aus dem 9-Bit-codierten Wort, bzw. aus dessen signifikantesten Bits, wird mit Hilfe eines Paritäts-Bit-
Generators ein Paritäts-Bit erzeugt, das zusammen mit dem
9-Bit-codierten Wort auf einen 10-Bit-Parallel-Seriell-
Wandler gegeben wird, der einen seriellen Bitstrom von
beispielsweise 135 MBit/s erzeugt. Durch eine Taktversorgungseinheit, die vorteilhafterweise durch die Zeilenfrequenz synchronisiert wird, werden die benötigten Wort-
und Bit-Taktfrequenzen erzeugt.

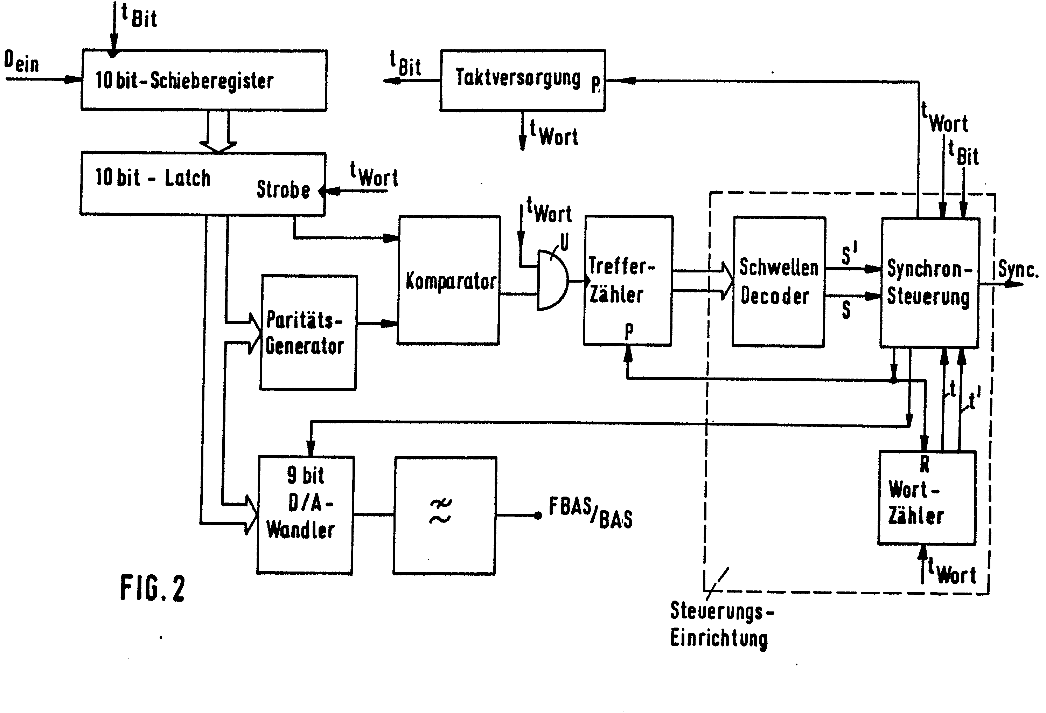

In Fig. 2 ist ein Seriell-Parallel-Wandler erkennbar, der
aus einem 10-Bit-Schieberegister und einem 10-Bit-Latch besteht und der den empfangenen seriellen Bitstrom Dein-parallel wandelt. Das an den 10 Ausgängen des 10-Bit-Schieberegisters anstehende Wort wird mit Hilfe eines Worttaktes $t_{wort}$,
der an dem Takteingang des Latches (Strobe) ansteht, im
Latch gespeichert. Ein Paritäts-Bit-Generator erzeugt
daraus gemäß dem Algorithmus auf der Sendeseite ein Paritäts-Bit. Ferner sind ein Komparator, ein UND-Glied U, ein
Treffer-Zähler, eine Steuerungseinrichtung, ein Schwellendecoder und ein zweiter Zähler, der Wortzähler, erkennbar.

Durch den Komparator wird das 10. Bit mit dem durch den Paritätsgenerator erzeugten Bit verglichen, und im Falle einer Übereinstimmung der Trefferzähler um 1 inkrementiert, indem über das leitend gesteuerte UND-Glied der Worttakt twort auf den Takteingang des Trefferzählers einwirken kann. Durch den Wortzähler werden die empfangenen Wörter modulo t gezählt. Nach t empfangenen Wörtern wird von der Synchronisationssteuerungseinrichtung veranlaßt zu prüfen, ob der Treffer-Zählerstand $\geq$ s bzw. $<$ s ist. Diese Prüfung wird durch den Schwellendecoder durchgeführt. Im Falle der Nichtsynchronisation werden bei Nichterreichen der Schwelle s der Treffer-Zähler von der Synchronisationssteuerung auf einen einstellbaren Anfangswert zurückgesetzt und der Worttakt um 1 Bittakt verzögert. Dies erfolgt am günstigsten durch Zurücksetzen des in der Taktversorgung erzeugten Worttaktes twort über deren Reset-Eingang. Durch die 1-Bit-Verzögerung des Worttaktes wird das Fenster, durch das der serielle ankommende Bitstrom parallelisiert wird, um 1 Bit verschoben, so daß nunmehr die benachbarte Bitposition als Paritätsbit untersucht wird. Wird dagegen die Schwelle s durch die Trefferzahl in ununterbrochener Reihenfolge m-mal hintereinander erreicht, so werden von der Synchronisierungssteuerung die an dem 10-Bit-Latch anstehenden 9 Bit-Datenwörter als synchronisiert erkannt. Befindet sich die Empfangseinrichtung in Synchronisation und wird in ununterbrochener Reihenfolge l-mal die Schwelle s nicht erreicht, so gelten die genannten Datenwörter nicht mehr als synchronisiert.

Die Erfindung geht von der Erkenntnis aus, daß im Synchronisationsfalle die Anzahl der Treffer proportional zur Kanalgüte eingeht, oder umgekehrt ausgedrückt, daß die Anzahl der Nichttreffer der Bitfehlerrate des Kanals entspricht. Im Nichtsynchronismusfall erhält man als statischen Mittelwert eine Trefferzahl von 50%. Die Auswahl einer günstigen Schwelle ist demnach abhängig von der jeweiligen vorliegenden Kanalbitfehlerrate und von der jeweiligen Synchronisationszeitanforderung. Beispielsweise kann für t ein Wert von 16 und für s ein solcher von 15 angegeben werden, so daß Kanäle mit einer Bitfehlerrate von etwa $6 \cdot 10^{-2}$ und besser mit dem erfindungsgemäßen Verfahren synchronisiert werden. können. Um die Wahrscheinlichkeit der Synchronisationsaussage zu erhöhen, wird die Überwachung von mehreren t Wörtern abgewartet, bevor eine Entscheidung gefällt wird. Als Anhaltswerte für m und l können 3 bzw. 4 genommen werden. Um eine schnellere Synchronisation zu erzielen, sind vorteilhafterweise 2 zusätzliche Schwellen s' und t' vorgesehen, die an die Stelle der Schwellen s und t treten und die beispielsweise die wesentlich kleineren Werte s'=2 bzw. t'=4 annehmen.

Vorteilhafterweise ist der 9-Bit-Digital-Analog-Wandler, der zur Umwandlung der digitalen Daten in das analoge FBAS- bzw. BAS-Signal vorgesehen ist, von der Synchronisationssteuerungs-Einrichtung steuerbar, indem im Synchronismusfall bei einem auftretenden Bitfehler eines empfangenen Datenwortes der Digital-Analog-Wandler für ein Wort angehalten wird, so daß der zuletzt gewandelte Analogwert beibehalten und damit wiederholt wird.

-6-

ANT Nachrichtentechnik GmbH

Gerberstrasse 33

D-7150 Backnang

K1 E7/Ruf/ma
BK 82/64

Patentansprüche

1. Verfahren zur Synchronübertragung von seriellen, wortweise geordneten digitalen Daten mit Einrichtungen zum Fehlerschutz und zur Wortsynchronisation, <u>dadurch gekennzeichnet,</u> daß

    a) auf der Sendeseite ein Bitstrom erzeugt wird,
       der jeweils außer dem Informationsanteil von
       n Bits des Datenwortes lediglich den wortweise
       erzeugten Fehlerschutzanteil, dem r Bits als
       feste Position im Wort zugeordnet sind, enthält,
       daß

    b) auf der Empfangsseite der ankommende Bitstrom
       seriell-/parallel gewandelt wird in Blöcke, deren
       Länge jeweils der Wortlänge von n+r Bits entspricht,
       daß

    c) für jeden Block für die empfangenen n Informa-
       tionsbits der Fehlerschutzanteil von r Bits
       codiert wird,
       daß

d) dieser mit den empfangenen r Fehlerschutzbits verglichen wird,
daß

e) im Falle der Gleichheit nach s von t Blöcken
die Wortsynchronisation erkannt wird,
daß

f) im Falle der Ungleichheit nach u Blöcken die
Blöcke aus dem um 1 Bit versetzten Bitstrom
gebildet werden,
daß

g) anschließend die Verfahrensschritte c), d)
und f) so lange wiederholt werden, bis die Bedingung zur Durchführung des Verfahrensschrittes
e) erfüllt ist.

2. Verfahren nach Anspruch 1, dadurch gekennzeichnet, daß
der Anteil zum Fehlerschutz aus r = 1 Paritätsbit besteht.

3. Verfahren nach Anspruch 1 oder 2, gekennzeichnet durch
die Verwendung bei der Synchronübertragung von 8-bit-codierten PCM-Signalen.

4. Verfahren nach Anspruch 1 oder 2, gekennzeichnet durch
die Verwendung bei der Übertragung von 9-bit-codierten
FBAS- bzw. BAS-Signalen.

5. Schaltungsanordnung zur Durchführung des Verfahrens nach
Anspruch 4, dadurch gekennzeichnet, daß auf der Sendeseite eine Einrichtung zur Paritätsbiterzeugung (Paritätsgenerator) vorgesehen ist, deren Ausgangssignal als
10. Bit zusammen mit dem 9-bit-codierten FBAS- bzw. BAS-
Signal einem 10-Bit-Parallel-Serienwandler zugeführt
wird, daß auf der Empfangsseite ein 10-Bit-Serien-Parallelwandler, eine Einrichtung zur Paritäts-Bit-Erzeugung, (Paritätsgenerator) ein Komparator, ein Treffer-Zähler und eine Steuerungseinrichtung vorgesehen sind, daß die für die Paritäts-Bit-Erzeugung relevanten
Ausgänge der ersten 9 Ausgänge des Serien-Parallelwandlers mit den Eingängen der Einrichtung zur Paritäts-Bit-
Erzeugung verbunden sind, daß der Ausgang der Paritäts-
Bit-Erzeugung und der 10. Ausgang des Serien-Parallel
wandlers mit den Eingängen des Komparators verbunden
sind, daß der Ausgang des Komparators mit dem Takteingang des Treffer-Zählers verbunden ist, daß die Ausgänge des Treffer-Zählers und sein Preset- oder Reset-
Eingang mit der Steuerungseinrichtung verbunden sind
und daß die Steuerungseinrichtung mit dem Steuereineingang (Strobe) des Serien-Parallelwandlers zur wortweisen (in einem Worttakt (twort) erfolgenden) Datenausgabe an seinen Ausgängen verbunden ist.

6. Schaltungsanordnung nach Anspruch 5, dadurch gekennzeichnet, daß der Serien-Parallelwandler aus einem 10-Bit-
Schieberegister mit nachgeschaltetem 10-Bit-Latch besteht, dessen Takteingang (Strobe) der Steuereingang
ist.

7. Schaltungsanordnung nach Anspruch 5 oder 6, dadurch gekennzeichnet, daß zwischen Komparatorausgang und Takteingang des Treffer-Zählers ein UND-Glied (U) vorgesehen
ist, durch das im Falle der Gleichheit der Treffer-Zähler inkrementiert wird.

8. Schaltungsanordnung nach Anspruch 6 oder 6 und 7, dadurch gekennzeichnet, daß die Steuerungseinrichtung
einen Schwellwertdecoder (Schwellendecoder) mit der
Schwelle s und einen weiteren modulo t zählenden Zähler
(Wortzähler) enthält, daß nach t Wörtern der Stand des
Treffer-Zählers auf $\geq$ s bzw. < s untersucht wird daß
im Falle der Nichtsynchronisation beim Nichterreichen
der Schwelle s der Treffer-Zähler in seine Ausgangsstellung zurückgesetzt (p) und der neue Worttakt (twort)
der um 1 Bit verzögerte alte Worttakt wird, daß nach
m-maligem ununterbrochenem Erreichen der Schwelle s die an den ersten 9 Ausgängen des Latches anstehenden Datenwörter als synchronisiert gelten und daß im Falle der
Synchronisation bei l-maligem, ununterbrochenem Nichterreichen der Schwelle s diese Datenwörter nicht mehr als
synchronisiert gelten.

TP

FBAS
/BAS

$\approx$

9 bit-
A/D-
Wandler

$t_{Wort}$

Paritätsgenerator

10 bit-
Parallel-
Seriell-
Wandler

$D_{aus}$

$t_{Wort}$   $t_{Bit}$

$t_{Wort}$   $t_{Bit}$

Zeilenfrequenz

Taktversorgung

FIG. 1

0100818

Sync.

Synchron-Steuerung

$t_{Wort}$  $t_{Bit}$

Wort-Zähler  R

$t_{Wort}$

$t'$

$t$

Steuerungs-Einrichtung

Schwellen Decoder

$S'$  $S$

Taktversorgung P.

$t_{Wort}$

$t_{Bit}$

Treffer-Zähler  P

$t_{Wort}$  U

Komparator

Paritäts-Generator

$t_{Wort}$

10 bit-Schieberegister

10 bit - Latch

Strobe

$t_{Wort}$

$t_{Bit}$

$D_{ein}$

9 bit D/A-Wandler

FBAS/BAS

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-3 159 811  (JAMES et al.)<br><br>* Spalte 1, Zeile 66 - Spalte 2, Zeile 41; Spalte 3, Zeile 36 - Spalte 5, Zeile 45; Ansprüche 1-7,15-16 * | 1,2,5, 7 | H 04 L   7/04 |
| A | | 3,4,8 | |
| A | DE-A-2 021 081  (RCA)<br><br>* Seite 2, Zeilen 8-15; Seite 5, Zeile 25 - Seite 12, Zeile 16 * | 1,2,5, 7 | |
| A | EP-A-0 039 150  (SONY)<br>* Seite 3, Zeile 1 - Seite 6, Zeile 35 * | 1,2,5 | |
| A | DE-B-1 275 130  (PHILIPS)<br>* Spalte 2, Zeile 47 - Spalte 3, Zeile 15 * | 1,2 | **RECHERCHIERTE SACHGEBIETE (Int. Cl. ³)**<br><br>H 04 J<br>H 04 L |
| A | DE-A-2 554 125  (WESTERN)<br>* Seite 7, Zeile 7 - Seite 13, Zeile 13; Seite 23, Zeile 5 - Seite 28, letzte Zeile * | 1-3,5 | |

---                -/-

Der vorliegende Recherchenbericht wurde für alle Patentansprüche erstellt.

| Recherchenort<br>DEN HAAG | Abschlußdatum der Recherche<br>22-07-1983 | Prüfer<br>GULDNER H.D. |
|---|---|---|

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | ELEKTRONIK, Band 31, Nr. 7, 8. April 1982, Seiten 84-85, München, DE. J. WAGNER: "Serieller IEC-Bus" * Bild 1 * | 6 | |
| A | E.L. GRUENBERG: "Handbook of telemetry and remote control", 1967, Seiten 8-36 bis 8-37, Kapitel 8, "PCM telemetry systems", McGraw-Hill Book Company, New York, USA * Seite 8-37, Zeilen 35-49 * | 1,2,5 | |
| A | DE-B-2 407 285 (SIEMENS) * Spalte 3, Zeile 42 - Spalte 6, Zeile 54 * | 2,3,6 | |

RECHERCHIERTE
SACHGEBIETE (Int. Cl. 3)

Der vorliegende Recherchenbericht wurde für alle Patentansprüche erstellt.

| Recherchenort DEN HAAG | Abschlußdatum der Recherche 22-07-1983 | Prüfer GULDNER H.D. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82